# EUROPÄISCHE PATENTSCHRIFT

(11) **EP 2 286 889 B1**
(45) Veröffentlichungstag und Bekanntmachung des Hinweises auf die Patenterteilung: **08.05.2013**
(21) Anmeldenummer: 10008518.2
(22) Anmeldetag: 16.08.2010
(51) Int. Cl.: B01D 45/12, B07B 7/08

(54) **Vorrichtung zur Aufteilung eines Gasstromes**
Device for dividing a gas flow
Dispositif de répartition d'un flux de gaz

(30) Priorität: 14.08.2009 DE 102009037621
(43) Veröffentlichungstag der Anmeldung: 23.02.2011
(73) Patentinhaber: Rippert Besitzgesellschaft mbH & Co. KG, 33442 Herzebrock-Clarholz (DE)
(72) Erfinder: Franzgrote, Werner, 48231 Warendorf, (DE)
(74) Vertreter: Schober, Mirko

(56) Entgegenhaltungen:
- DE-A1- 2 063 634
- GB-A- 2 024 038
- US-A- 2 044 915
- US-A- 4 574 045

## Beschreibung

Die Erfindung betrifft eine Vorrichtung zur Aufteilung eines Gasstromes nach dem Oberbegriff des Anspruchs 1.

Bei feststoffemittierenden Prozessen, insbesondere bei der spanenden Bearbeitung von Werkstoffen, werden über Absaugaggregate die Feststoffe über einen Gasstrom abgeleitet. Zur Abscheidung von Feststoffen in Gasströmen werden entsprechende Filter oder Abscheidevorrichtungen eingesetzt. Diese sind in der Regel teuer, weil oftmals große Volumenströme verarbeitet werden müssen. Je größer der Volumenstrom. Desto größer sind der hierzu erforderliche Energieeinsatz und die hierzu erforderlichen Filteranlagen.

Eine gattungsgemäße Vorrichtung ist z.B. aus der US 2 044 915 A bekannt. Die genannte Druckschrift offenbart eine Separiereinrichtung zur Aufteilung eines Gasstromes in einen ersten Strömungskanal und einen zweiten senkrecht dazu angeordneten Strömungskanal, wobei ein Teil des Lufstroms mit Partikeln über eine Abschälplatte in den senkrecht abzweigenden Strömungskanal geleitet wird. Dazu ist dieser Strömungskanal gegenüber dem übrigen Kanal verschieblich, um die Position der Abschälplatte im anderen Kanal variieren zu können.

Aufgabe der Erfindung ist es, den Abscheidevorgang effektiver und vor allem günstiger zu gestalten.

Diese Aufgabe wird durch eine Vorrichtung mit den Merkmalen des Anspruchs 1 gelöst, vorteilhafte Ausführungsformen finden sich in den Unteransprüchen.

Erfindungsgemäß erfolgt die Abscheidung unter Ausnutzung der Fliehkraft. Dabei strömt der Gasstrom durch einen gebogenen Kanal, so dass an dessen Seite mit dem größeren Radius insbesondere die schweren Partikel im Gasstrom durch die Fliehkraft radial nach außen gedrückt werden. Hinter dem bogenförmigen Kanal ist eine Verzweigung mit wenigstens zwei Strömungskanälen angeordnet, wobei die durch die Fliehkraft nach außen beschleunigten Partikel im Gasstrom im Wesentlichen in einem partikelreichen, kleinvolumigen Teilgasstrom durch einen der Strömungskanäle geleitet werden, während ein partikelarmer, großvolumiger Teilgasstrom durch den anderen der Strömungskanäle geleitet wird. Einer der Strömungskanäle, bevorzugt der, in den der kleinvolumige, partikelreiche Teilgasstrom gelangen soll, weist einen Strömungskanalabschnitt auf, der verschieblich ausgebildet ist. Dieser Abschnitt kann bis in den aus dem gebogenen Kanal zur Verzeigung führenden Strömungsweg hinein bewegt und stufenlos an der gewünschten Position fixiert werden, so dass damit der Strömungsquerschnitt an der Verzweigung variiert werden kann. Hierdurch ist nicht nur eine effektive Separierung möglich, sondern es lässt sich ein optimaler Betriebspunkt einstellen. Zudem erlaubt die erfindungsgemäße Konstruktion den Einsatz von Standardbauteilen und ist daher auch kostengünstig zu fertigen bzw. für bestehende Anlagen einfach nachrüstbar.

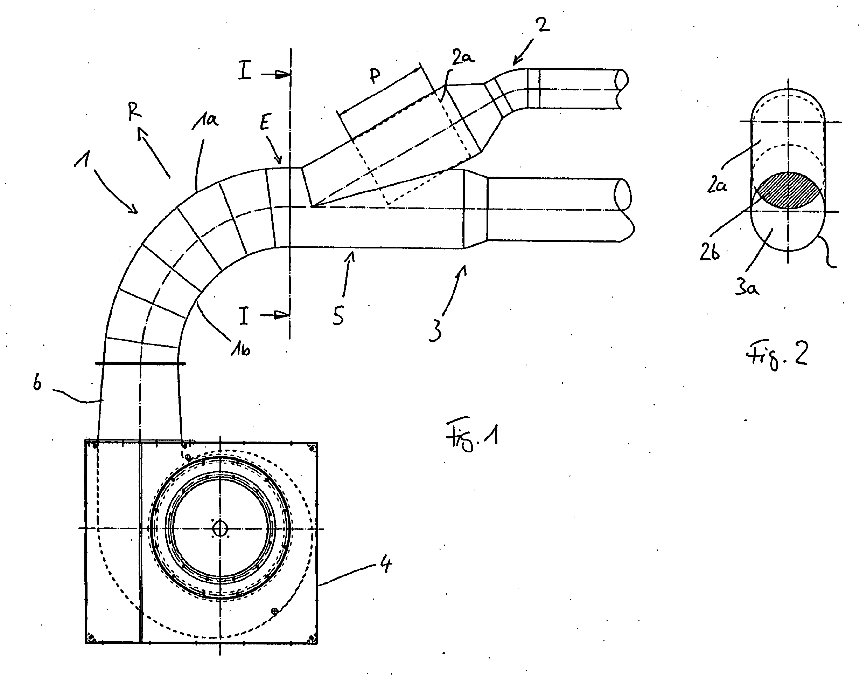

Die Erfindung wird nachfolgend anhand des Ausführungsbeispiels in den Figuren 1 und 2 schematisch näher erläutert.
Figur 1 zeigt einen Längsschnitt durch die erfindungsgemäße Vorrichtung.
Figur 2 zeigt einen Querschnitt im Verzweigungsbereich längs der Linie I-I aus Figur 1.

Der aus einem Gebläse 4 austretende, mit Partikeln angereicherte Gasstrom passiert zunächst einen bogenförmigen Abschnitt 1, welcher über ein Standard-Übergangsstück 6 mit dem Gebläse 4 verbunden ist. Der Bogen 1 ist ebenfalls als Standardbauteil erhältlich. Darin findet durch Fliehkraft, die die im Gasstrom enthaltenen Partikel in Radialrichtung R nach außen drückt, eine Materialaufkonzentrierung an der Außenwandung la statt, so dass sich eine "Materialsträhne" bildet, während sich im Bereich der Innenwandung 1b eine geringe Partikelkonzentration findet. Durch einen runden Querschnitt kann dieser Vorgang begünstigt werden. Die Fliehkraft ist am Endbereich E des Bogens 1 am größten. Hinter dem Bogen 1 (in Strömungsrichtung) ist eine Verzweigung 5 in (im gezeigten Beispiel) zwei Strömungskanäle 2 und 3 vorgesehen. Ein erster Kanal setzt in einem Winkel im Bereich der Außenwand 1a des Bogens 1 an, so dass die durch die Fliehkraft im Bogen 1 gebildete Materialsträhne nach außen driftet und so in den Strömungskanal 2 gelangt. Damit wird in dem Strömungskanal ein partikelreicher Teilgasstrom befördert, während in den Strömungskanal 3 ein partikelarmer Teilgasstrom gelangt. Da noch immer Partikel in den Strömungskanal 3 gelangen können, ist in dem Abzweigrohr des Strömungskanals 2 ein verschieblicher Abschnitt 2a, bevorzugt ein Schieberohr, eingesetzt. Dieser Abschnitt 2a ist verschieblich und fixierbar, um den optimalen Betriebspunkt finden und fixieren zu können.

Wird ein runder Rohrquerschnitt gewählt, so kann im Gegensatz zu einem rechteckigen Kanalquerschnitt insgesamt mit einem geringeren Querschnitt gearbeitet werden. In Figur 2 ist der Rohrquerschnitt entlang der Linie I-I gezeigt. Durch das Verschieben des Abschnitts 2a steht für den partikelreichen Gasstrom die schraffierte Öffnung 2b zur Verfügung, die je nach Bedarf in der Größe durch Verschieben des Abschnitts 2a variiert werden kann. Bei der Erfindung wird der Querschnitt 1c der Leitung 1 aufgeteilt in einen für den partikelreichen Gasstrom zu Verfügung stehenden Strömungsquerschnitt (schraffierte Fläche 2b) und einen für den partikelarmen, großvolumigen Gasstrom Strömungsquerschnitt 3a. Bei Wahl einer runden Rohrgeometrie sowohl für den verschieblichen Abschnitt 2a als auch für das Rohr 1 kann das Flächenverhältnis zwischen den in Figur 2 gezeigten Flächen 3a und 2b optimiert werden, so dass im Ergebnis immer ein möglichst großer Querschnitt 3a für den niedrigkonzentrierten großvolumigen Teilgasstrom und ein möglichst kleiner Querschnitt 2a für den hochkonzentrierten kleinvolumigen Teilgasstrom zur Verfügung steht. Dadurch können im Vergleich zu Rechteckrohren geringere Strömungswiderstände und somit ein geringerer erforderlicher Energieeinsatz ermöglicht werden.

Bevorzugt kann der gebogene Kanalabschnitt auch Teil eines Ventilatorgehäuses, insbesondere Teil des Spiralgehäuses des Ventilators sein. Möglich ist auch, zur Vorabscheidung vor den gebogenen Kanalabschnitt einen Spiralventilator vorzuschalten.

## Patentansprüche

1. Vorrichtung zur Aufteilung eines Gasstromes, wobei ein gebogener Kanalabschnitt (1) und eine in Strömungsrichtung hinter dem gebogenen Kanalabschnitt (1) angeordnete Verzweigung (5) vorgesehen sind, wobei im Bereich der Verzweigung (5) der Gasstrom auf zwei Strömungskanäle (2, 3) aufgeteilt wird, wobei einer (2) der beiden Strömungskanäle (2, 3) einen verschieblichen Strömungskanalabschnitt (2a) aufweist und im Bereich der Außenwand (1a) des gebogenen Kanalabschnitts (1) in einem Winkel ansetzt,
**dadurch gekennzeichnet,**
**dass** der verschiebliche Strömungskanalabschnitt (2a) einen etwa runden Querschnitt aufweist, wobei der eine Strömungskanal (2) gegenüber dem anderen Strömungskanal (3) in Strömungsrichtung in einem spitzen Winkel verläuft und in den Strömungsweg des Gasstroms stromab des gebogenen Kanalabschitts (1) einbringbar ist und so angeordnet ist, dass er aus einem durch den gebogenen Kanalabschnitt (1) strömenden Gasstrom einen Teilstrom aufnimmt, in welchem sich schwere Partikel befinden.

2. Vorrichtung nach Anspruch 1,
**dadurch gekennzeichnet,**
**dass** der andere Strömungskanal (3) so angeordnet ist, dass er aus dem durch den gebogenen Kanalabschnitt (1) strömenden Gasstrom einen Teilstrom aufnimmt, in welchem sich leichtere Partikel befinden.

3. Vorrichtung nach einem der vorherigen Ansprüche,
**dadurch gekennzeichnet,**
**dass** der verschiebliche Strömungskanalabschnitt (2a) ein Rohrabschnitt ist, welcher in den Strömungsweg des Gasstromes einbringbar ist, welcher aus dem gebogenen Kanalabschnitt (1) zur Verzweigung strömt.

4. Vorrichtung nach einem der vorherigen Ansprüche,
**dadurch gekennzeichnet,**
**dass** der gebogene Kanalabschnitt (1) einen etwa runden Querschnitt aufweist.

5. Vorrichtung nach einem der vorherigen Ansprüche,
**dadurch gekennzeichnet,**
**dass** der gebogene Kanalabschnitt (1) Teil des Gehäuses eines Ventilators ist.

6. Vorrichtung nach einem der vorherigen Ansprüche,
**dadurch gekennzeichnet,**
**dass** vor dem gebogenen Kanalabschnitt (1) zur Vorabscheidung von Gaspartikeln ein Ventilator mit Spiralgehäuse vorgesehen ist.

## Claims

1. Device for dividing a gas flow wherein a curved pipe section (1) and a branch pipe (5) mounted in the flow direction behind the curved pipe section (1) are provided wherein in the region of the branch pipe (5) the gas flow is divided into two flow channels (2, 3) wherein one (2) of the two flow channels (2, 3) has a displaceable flow channel section (2a) and is set at an angle in the area of the outer wall (1 a) of the curved pipe section (1), **characterised in that** the displaceable flow channel section (2a) has a roughly circular cross-section wherein the one flow channel (2) runs at an acute angle in the flow direction relative to the other flow channel (3) and can be introduced into the flow path of the gas flow downstream of the curved pipe section (1) and is arranged so that it receives a partial flow which flows out of a gas flow flowing through the curved pipe section (1) and in which heavy particles are located.

2. Device according to claim 1 **characterised in that** the other flow channel (3) is arranged so that it receives a partial flow from the gas flow flowing through the curved pipe section (1) and in which lighter particles are located.

3. Device according to one of the preceding claims **characterised in that** the displaceable flow channel section (2a) is a tubular section which can be introduced into the flow path of the gas flow which streams out of the curved pipe section (1) to the branch pipe.

4. Device according to one of the preceding claims **characterised in that** the curved pipe section (1) has a roughly circular cross-section.

5. Device according to one of the preceding claims **characterised in that** the curved pipe section (1) is part of the housing of a ventilator.

6. Device according to one of the preceding claims **characterised in that** a ventilator with a spiral housing is provided in front of the curved pipe section (1) for the preliminary separation of gas particles.

## Revendications

1. Dispositif pour la répartition d'un flux de gaz, dans lequel sont prévues une section de canal courbe (1) et une ramification (5), disposée en aval de la section de canal courbe (1), sachant que, dans la région de la ramification (5), le flux de courant est réparti sur deux canaux d'écoulement (2, 3), l'un (2) des deux canaux d'écoulement (2, 3) présentant une section de canal d'écoulement (2a) déplaçable et prolongeant la paroi externe (1a) de la section de canal courbe (1) en formant un angle,
**caractérisé en ce que**
la section de canal d'écoulement (2a) déplaçable présente une section transversale approximativement ronde, sachant que l'un (2) des canaux d'écoulement s'étend dans la direction d'écoulement en formant un angle droit par rapport à l'autre canal d'écoulement (3) et peut être amené en aval de la section de canal courbe, (1) sur le parcours d'écoulement du flux de gaz, et est agencé de sorte qu'il accueille une partie du courant de gaz s'écoulant à travers la section de canal courbe (1), lequel courant partiel contient des particules lourdes.

2. Dispositif selon la revendication 1, **caractérisé en ce que** l'autre canal d'écoulement (3) est disposé de sorte qu'il accueille une partie du flux de gaz s'écoulant à travers la section de canal courbe (1).

3. Dispositif selon l'une des revendications précédentes, **caractérisé en ce que** la section de canal d'écoulement déplaçable (2a) est une portion de tuyau, qui peut être installée sur le parcours du flux, qui s'écoule de la section de canal courbe (1) vers la ramification.

4. Dispositif selon l'une des revendications précédentes, **caractérisé en ce que** la section de canal courbe (1) présente une section transversale approximativement ronde.

5. Dispositif selon l'une des revendications précédentes, **caractérisé en ce que** la section de canal courbe (1) fait partie du boîtier d'un ventilateur.

6. Dispositif selon l'une des revendications précédentes, **caractérisé en ce qu'**un ventilateur avec boitier en spirale est prévu en amont de la section de canal courbe (1) pour la séparation préalable de particules de gaz.
